## Europäisches Patentamt
## European Patent Office
## Office européen des brevets

(19)

(11) Numéro de publication: **0 002 396**
**B1**

(12) **FASCICULE DE BREVET EUROPEEN**

(45) Date de publication du fascicule du brevet: **20.01.82**

(51) Int. Cl.³: **F 16 B 45/02, B 66 C 1/36**

(21) Numéro de dépôt: **78400129.9**

(22) Date de dépôt: **06.10.78**

(54) **Ensemble de crochet de manutention.**

(30) Priorité: **24.11.77 FR 7735304**

(43) Date de publication de la demande:
**13.06.79 Bulletin 79/12**

(45) Mention de la délivrance du brevet:
**20.01.82 Bulletin 82/3**

(84) Etats contractants désignés:
**DE GB NL SE**

(56) Documents cités:
**FR - A - 704 478**
**GB - A - 7778 A.D. 1909**
**GB - A - 602 498**
**US - A - 1 449 364**
**US - A - 1 554 841**
**US - A - 2 359 557**
**US - A - 2 436 792**
**US - A - 2 462 965**
**US - A - 2 476 847**
**US - A - 3 785 015**

(73) Titulaire: **Altabe, Edmond**
**167 Avenue Gambetta**
**F-75020 Paris (FR)**

(72) Inventeur: **Altabe, Edmond**
**167 Avenue Gambetta**
**F-75020 Paris (FR)**

(74) Mandataire: **Hirsch, Marc-Roger**
**34 rue de Bassano**
**F-75008 Paris (FR)**

Courier Press, Leamington Spa, England.

Ensemble de crochet de manutention

La présente invention a pour objet un ensemble de crochet de manutention appelé à être suspendu à l'extrémité du câble de levage d'un appareil de levage et à porter une élingue ou analogue destinée à supporter une charge qui doit être soulevée ou abaissée.

Des ensembles de crochet de manutention connus de ce genre comportent un élément de crochet formant une anse dans laquelle l'élingue peut être introduite, ou d'où celle-ci peut être retirée, en passant à cet effet au travers d'un intervalle défini entre une extrémité de l'élément de crochet et une partie opposée à cette extrémité; dans les ensembles de crochets de manutention du type considéré, ledit intervalle peut être fermé ou obturé par un linguet ou cliquet de sécurité sollicité par un ressort, monté et agencé de façon telle que sous l'effet du ressort associé, ce linguet soit sollicité vers la position dans laquelle il ferme ou obture cet intervalle, et donc empêche l'elingue précédemment introduite dans l'élément de crochet de s'en échapper intempestivement. Pour introduire l'élingue dans cet ensemble de crochet connu, et notamment pour l'en retirer, par exemple après l'achèvement d'une opération de manutention, l'opérateur doit agir manuellement sur le linguet afin d'amener celui-ci dans sa position ouverte permettant le dégagement de l'intervalle sus-mentionné de l'élément de crochet.

Ces dispositifs connus présentent des inconvénients considérables: par exemple, il n'est pratiquement pas possible de réaliser le ressort sollicitant le linguet avec des dimensions suffisantes pour lui conférer des caractéristiques de résistance mécanique et une longévité satisfaisantes. On a constaté, en effet, que le ressort utilisé dans les dispositifs connus de ce genre est sujet à rupture après un temps d'utilisation très court, une telle rupture rendant le dispositif intéressé inopérant tout en obligeant l'utilisateur à procéder à des opérations d'entretien et/ou de réparation fastidieuses et onéreuses.

Par ailleurs, lorsque l'opérateur agit manuellement sur le linguet pour permettre à l'élingue de passer à travers l'intervalle précité de l'élément de crochet, il existe un danger physique certain pour l'opérateur. En effet, étant donné que le linguet du dispositif connu est monté de façon telle qu'il doive pivoter vers l'intérieur de l'anse définie par l'élément de crochet afin de parvenir dans sa position ouverte, comme indiqué cidessus, l'opérateur est obligé de maintenir le linguet à l'intérieur de l'élément de crochet pendant qu'il en retire l'élingue, ce qui comporte un danger certain de blessure de la main de l'opérateur.

On connaît un autre ensemble de crochet de manutention, vendu sous la désignation commerciale de "BULTEN", qui comprend un élément de crochet articulé de support appelé à être porté par le câble de levage de l'appareil de levage, cet élément de crochet formant, dans sa position fermée, une anse entièrement fermée avec ledit élément de support. L'élément de crochet est maintenu dans la position fermée par un cliquet sollicité par un ressort et disposé à proximité de l'élément de support. Afin d'amener cet ensemble de crochet de manutention dans la position ouverte, en vue d'y introduire ou d'en retirer l'élingue, l'opérateur doit actionner manuellement un levier d'actionnement s'étendant à l'extérieur de l'anse formée par l'ensemble de crochet. Comme ce levier est également disposé au voisinage de l'élément de support, cet actionnement manuel présente un danger considérable pour la ou les mains de l'opérateur. En effet, dès que le levier a été actionné et que, par conséquent, l'élément de crochet est déverrouillé par rapport à l'élément de support, l'élément de crochet pivote sous l'effet de la gravité pour ouvrir l'ensemble de crochet dans une direction telle que le levier d'actionnement sus-mentionné s'approche de l'élément de support; de ce fait, il existe un risque certain de coincement et de blessure des doigts de l'opérateur.

De plus, on a constaté que, dans le cas des deux ensembles de crochet de manutention connus décrits ci-dessus, l'ensemble tend à pivoter ou à tourner sous l'effet de la charge à manipuler, dans une direction telle que la distance entre la zone inférieure de l'élément de crochet et l'intervalle précité diminue, ce qui accroît le risque de décrochement de l'élingue de levage (et de la charge supportée par elle) par rapport à l'ensemble de crochet de manutention.

Par ailleurs, le brevet français No 704 478 décrit un crochet pour engin de levage dans lequel un levier de verrouillage est déplaçable à l'intérieur d'une anse, ou boucle, formée par un élément de crochet, entre une position ouverte permettant d'introduire une élingue dans la boucle et une position fermée dans laquelle le levier entre en butée, à son extrémité supérieure liée à un câble de levage ou analogue, avec une surface de butée définie à la partie adjacente supérieure de l'élément de crochet, lorsque l'ensemble pourvu de l'élingue et de la charge associée est soulevé par l'engin de levage. Un opérateur doit veiller à ce que l'élingue placée dans la boucle reste en place avant que le levier soit amené et maintenu dans la position fermée sous l'effet du poids de la charge dégagée de son support antérieur (par example du sol) et suspendue par l'ensemble de crochet soulevé par l'engin. Pendant cette phase d'opération antérieure au soulèvement proprement dit, les mains de l'opérateur sont exposées à un coincement accidentel non seulement entre l'extrémité inférieure du levier et l'extrémité adjacente de l'élément de crochet contre laquelle celle-là vient s'appliquer, mais en plus entre l'extrémité supérieure du levier et la surface de butée précitée avec laquelle cette extrémité supérieure du levier est appelée à entrer en contact.

Ce dispositif connu n'offre, par conséquent, pas de garanties suffisantes, quant à la sécurité de manipulation.

L'ensemble de crochet décrit dans le brevet britannique No 602 498 comporte un élément de crochet composite comprenant deux parois latérales reliées entre elles, notamment, par une paroi de butée sur laquelle un levier de verrouillage se déplaçant entre ces deux parois est appelé à venir prendre appui dans la position fermée de l'ensemble. Ce dispositif est relativement complexe, quant à sa construction; par ailleurs, il doit être fabriqué avec des tolérances relativement serrées afin que le levier de verrouillage soit toujours guidé autour de son axe de pivotement avec une précision suffisante pour que l'extrémité intéressée de ce levier s'engage bien dans l'intervalle défini entre lesdites parois latérales, sans jeu latéral excessif, et sans risque de coincement ou de blocage. De ce fait, ce dispositif connu oblige à prévoir un prix de revient assez élevé pour pouvoir offrir les caractéristiques voulues d'efficacité, de durabilité et de sécurité de fonctionnement.

Les brevets des États-Unis d'Amérique No 1 449 364, No 2 436 792, No 2 359 557 et No 2 462 965 décrivent des ensembles de crochet de manutention dans lesquels l'extrémité libre (ou inférieure) du levier de verrouillage est accrochée à l'extrémité libre adjacente de l'élément de crochet, dans la position de verrouillage, et maintenue dans cette position accrochée par gravité, lorsque l'ensemble est soulevé par l'engin de levage associé. L'axe de pivotement du levier est monté dans un trou allongé afin de permettre les mouvements de translation que nécessitent l'accrochage et le décrochage du levier par rapport à l'élément de crochet. Un opérateur doit intervenir lors de ces opérations d'accrochage et de décrochage, tout en veillant à ce que l'élingue à soulever soit maintenue en place, pendant l'opération d'accrochage du levier, l'ensemble de crochet ne devant pas être soumis à l'effet du poids de la charge à soulever, pendant cette opération, car autrement l'opérateur ne serait pas en mesure de provoquer le mouvement de translation relatif requis; ceci s'applique également à l'opération de décrochage du levier par rapport à l'élément de crochet en vue de l'ouverture de la boucle précitée. Il est évident que ces manipulations sont relativement fastidieuses et comportent des risques de blessure pour l'opérateur.

La présente invention a pour but de créer un ensemble de crochet de manutention qui, tout en offrant les avantages des dispositifs antérieurs, permet d'éliminer les inconvénients de ceux-ci. L'ensemble de crochet visé par l'invention doit notamment être facile à fabriquer, avec des tolérances relativement larges, donc de manière peu onéreuse; il ne doit pas comporter des mécanismes ou organes spéciaux de verrouillage et déverrouillage, tout en permettant d'introduire facilement une élingue ou analogue dans le crochet et de l'en retirer, dans la position basse de l'ensemble, sans danger de blessure pour l'opérateur et sans que celui-ci ait à procéder à des manipulations spéciales de l'ensemble, ce dernier devant assurer automatiquement le déplacement du levier de verrouillage vers l'intérieur de la boucle formée par le crochet lorsque l'ensemble, en position basse, prend appui sur le sol ou analogue, tandis que, dès le commencement du levage de l'ensemble, celui-ci doit assurer automatiquement la fermeture de la boucle par le levier de verrouillage, puis le verrouillage de ce dernier dans cette position de fermeture (ou de verrouillage).

L'ensemble de crochet de manutention faisant l'objet de la présente invention permet d'atteindre ce but grâce à l'agencement défini dans les revendications annexées.

En effet, la structure de l'ensemble de crochet selon l'invention, comportant un levier de verrouillage dont l'extrémité libre présente une forme de pied de biche coopérant avec des surfaces latérales d'appui du crochet, permet une fabrication facile de l'ensemble, avec des tolérances larges, donc peu onéreuse, d'autant plus que ledit ensemble ne comprend essentiellement que deux éléments constitutifs. Toujours grâce à cette structure particulière, un fonctionnement sûr de l'ensemble est assuré lors du déplacement du levier de verrouillage entre ses positions d'ouverture et de verrouillage (fermeture). La disposition relative de l'ouverture recevant le câble de levage et de l'axe de pivotement du levier de verrouillage assure un déroulement automatique, sous l'effet de la pesanteur, des phases d'ouverture, de fermeture et de verrouillage en position fermée de l'ensemble lorsque celui-ci prend appui sur le sol ou analogue et lorsqu'il est soulevé par l'appareil de levage, respectivement, le verrouillage étant d'ailleurs d'autant plus efficace que le poids de la charge manipulée est plus grand. Il s'en suit que l'opérateur n'est pas appelée à effectuer des manipulations spéciales, plus ou moins dangereuses pour sa sécurité, de l'ensemble afin d'assurer l'ouverture, la fermeture et le verrouillage; il lui suffit d'introduire dans la boucle, ou d'en retirer l'élingue pendant que l'ensemble est en position basse, comme indiqué ci-dessus, opérations simples et faciles qui ne comportent aucun risque de blessure pour l'opérateur.

L'invention sera décrite ci-après de manière plus détaillée en référence aux figures annexées qui représentent, à titre d'illustration, mais non de limitation, plusieurs modes de réalisation de l'invention.

La figure 1 est une vue en élévation d'un mode de réalisation de l'ensemble de crochet de manutention selon l'invention;

la figure 2 montre, en élévation, un détail d'un autre mode de réalisation de l'invention;

la figure 3 est une vue en élévation d'une variante de l'ensemble de crochet de manutention selon l'invention;

les figures 4 et 5 montrent, en perspective, un mode de réalisation des moyens d'accrochage de l'ensemble représenté sur la figure 1;

la figure 6 montre schématiquement et en élévation un autre mode de réalisation de l'ensemble de crochet de manutention selon l'invention, comportant des moyens pour verrouiller le levier de verrouillage et l'élément de crochet dans deux positions angulaires relatives différentes.

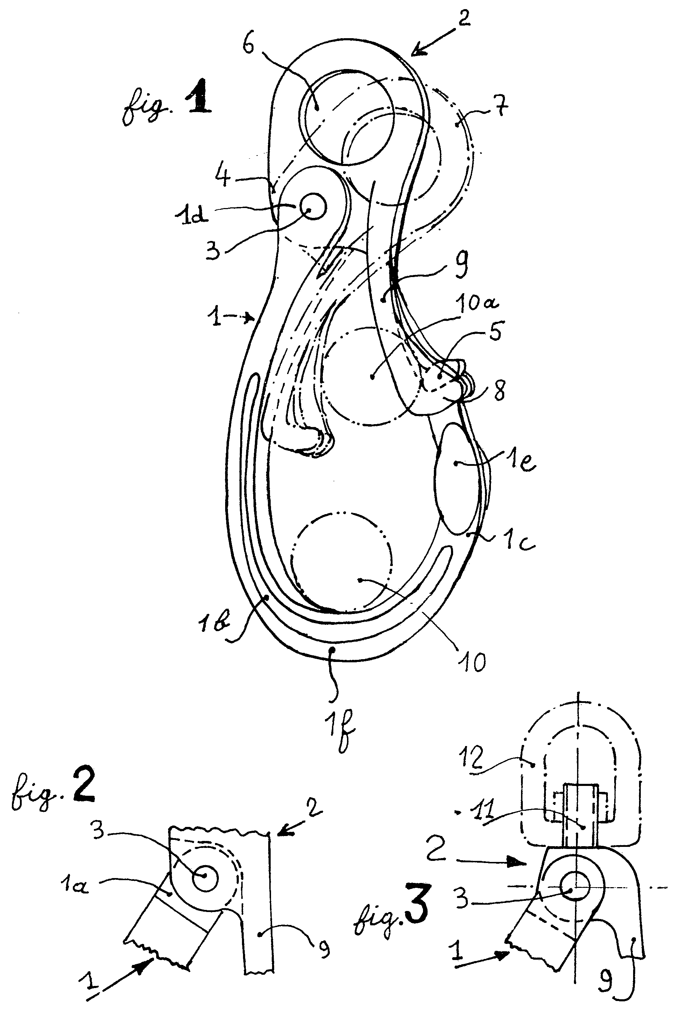

Ainsi qu'il est indiqué sur la figure 1, un ensemble de crochet de manutention selon l'invention comporte un élément de crochet désigné d'une manière générale par la référence 1, cet élément de crochet comportant généralement un bras relativement long 1b et une partie incurvée 1f qui relie le bras long 1b à un bras relativement court 1c; l'élément de crochet précité présente une configuration telle qu'un intervalle soit défini entre les extrémités libres respectives du bras long 1b et du bras court 1c. A proximité de son extrémité libre, le bras long 1b est monté à pivotement, au moyen d'un pivot 3, sur un levier de verrouillage. Dans le mode de réalisation représenté sur la figure 1, le levier de verouillage 2 comporte une partie plate 4 engagée entre les deux branches d'une partie en forme de chape ou de fourche 1d prévue à l'extrémité du bras long 1b et maintenant le pivot 3 précité qui est disposé dans un trou ménagé dans la partie plate 4 du levier de verouillage 2.

Dans la variant représentée sur la figure 2, le bras long de l'élément de crochet 1 est pourvu, à son extrémité libre, d'une partie plate 1a engagée entre les deux branches d'une partie en forme de chape ou de fourche prévue sur un levier de verrouillage 2 et maintient un pivot 3 s'étendant dans un trou ménagé dans la partie plate 1a de l'élément de crochet 1.

Le levier de verrouillage 2 comporte à son extrémité supérieure (tel que représenté sur les figures) une ouverture 6 appelée à recevoir un câble de levage ou analogue actionné par un appareil de levage tel qu'un palan, moufle ou engin similaire.

Dans la variante représentée sur la figure 3, ce câble de levage est appelé à être reçu dans un élément 12 formant oeillet qui est relié au levier de verrouillage 2 par un ensemble de poulies 11.

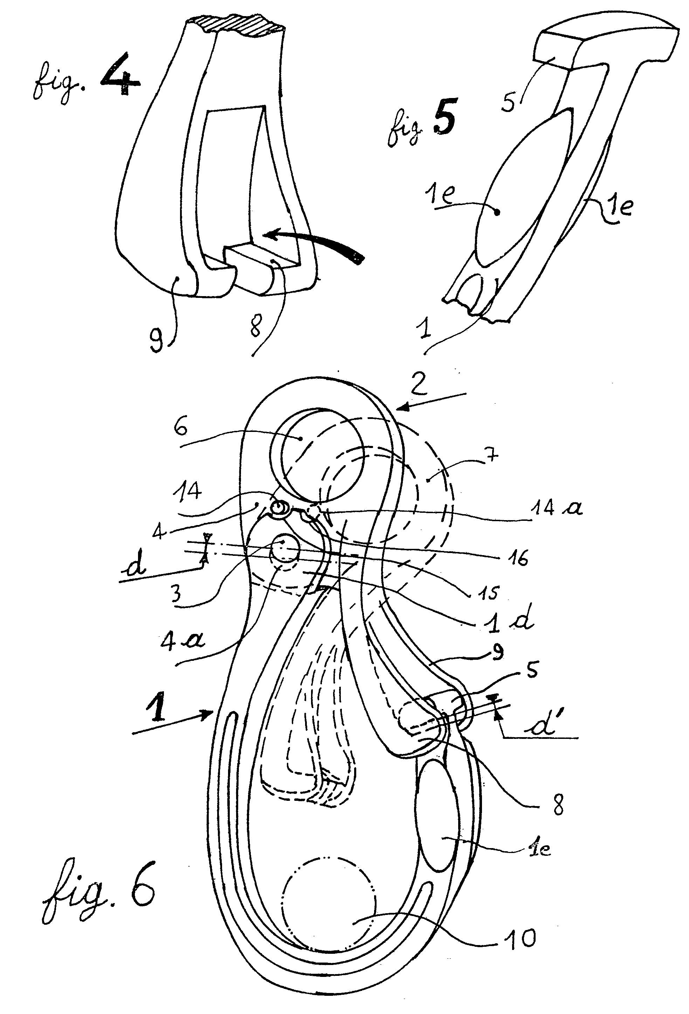

Le levier de verrouillage 2 comporte un bras 9 dont la longueur est suffisante pour fermer l'intervalle défini entre les extrémités libres respectives du bras long 1b et du bras court 1c de l'élément de crochet 1. A son extrémité inférieure (tel que représenté sur les figures) ce bras 9 comporte, une partie 8 en pied-de-biche appelée à s'engager sous des parties protubérantes latérales 5 formant des épaulements (voir figure 5) à l'extrémité libre du bras court 1c, lorsque l'ensemble de crochet de manutention est dans sa position fermée.

Lorsqu'on désire introduire une élingue de support 10 en la faisant passer à travers l'intervalle sus-mentionné (comme indiqué par la référence 10a) dans l'anse formée dans l'élément de crochet 1, on peut déplacer le levier de verouillage 2 à partir de la position représentée en trait plein sur la figure 1 (position fermée) vers la position représentée en pointillés en 7 sur la figure 1.

On comprendra que lorsqu'une telle élingue supportant une charge a été introduite dans l'élément de crochet et lorsqu'ensuite l'appareil de levage (non représenté) soulève au moyen du câble de levage sus-mentionné (non représenté) l'ensemble de crochet de manutention, ce dernier sera amené automatiquement et maintenu efficacement dans sa position fermée sous l'action même de la charge appliquée audit ensemble par l'intermédiaire de l'élingue 10. Ce résultat est obtenu grâce à l'agencement particulier de l'ensemble de crochet de manutention selon l'invention dans lequel lorsqu'une charge est suspendue à une câble de levage en vue d'être soulevée par un appareil de levage associé, l'ouverture 6 est placée à un niveau sensiblement supérieur à celui du pivot 3, ce dernier étant, à son tour, placé à un niveau sensiblement supérieur à celui de la zone inférieure de la partie incurvée 1f de l'élément de crochet, cette zone inférieure étant soumise à la force résultante du poids de la charge attachée à l'élingue 10. On comprendra également que l'opérateur n'a pas besoin de procéder à des manipulations compliquées ou dangereuses de l'ensemble de crochet de manutention poure amener ce dernier vers sa position ouverte en vue d'y introduire ou d'en retirer une élingue telle que 10, pendant que ledit ensemble de crochet n'est pas soumis à cette charge.

Dans le mode de réalisation représenté sur la figure 6, qui est comparable à celui représenté sur les figures 1, 4 et 5, la partie plate 4 du levier de verrouillage 2, qui est engagée entre les deux branches de la partie 1d en forme de chape ou de fourche de l'élément de crochet 1, comporte une butée fixe 14 s'étendant à travers ladite partie plate en direction perpendiculaire par rapport à celle-ci. Les prériphéries supérieures respectives sensiblement circulaires des deux branches (dont l'une seulement est visible sur le dessin) sont pourvues d'entailles 15 et 16. Le trou 4a ménagé dans la partie plate 4 du levier de verrouillage 2 est ovale ou allongé, de façon telle que sa dimension la plus grande s'étende sensiblement verticalement (tel que représenté sur le dessin). Par conséquent lorsque l'ensemble de crochet de manutention n'est pas soumis á l'effet d'une charge, le levier de verrouillage 2 peut être déplacé vers le bas sur une distance d relativement réduite, de sorte que la butée 14 s'engage dans l'entaille 15 lorsque l'ensemble se trouve dans sa position fermée telle que représentée en trait plein. Dans ces conditions, les moyens d'accrochage respectifs sont dégagés les uns des autres et séparés d'une faible distance correspondante d'. On comprendra que dans cette position, la butée 14 étant engagée dans l'entaille 15, cette butée empêche tout déplacement angulaire relatif intempestif entre le levier de verrouillage 2 et l'élément de crochet 1, ce qui constitue une protection appréciable de l'opérateur qui peut être appelé à manipuler l'ensemble dans ces conditions.

On peut dégager la butée 14 de l'entaille 15 en soulevant le levier de verrouillage 2 par rapport à l'élément de crochet 1, c'est-à-dire en déplaçant le pivot 3 vers sa position inférieure à l'intérieur du trou allongé 4a. On peut ensuite amener l'ensemble dans sa position ouverte représentée en ligne pointillée, en 7, dans laquelle la butée 14 se trouve en face de l'entaille 16. En répétant l'opération décrite ci-dessus, c'est-à-dire en abaissant le levier de verrouillage 2 par rapport à l'élément de crochet 1, la butée 14-qui est représentée dans cette position en pointillés comme indiqué en 14a- peut être amenée en engagement avec l'entaille 16, où elle verrouille alors l'ensemble de crochet de manutention dans la position ouverte dans laquelle l'opérateur peut introduire une élingue 10 ou retirer une telle élingue de cet ensemble, sans courir de risque de blessures par une fermeture accidentelle dudit ensemble.

Dans une variante avantageuse, l'ensemble de crochet comporte, à proximité de l'extrémité libre du bras court 1c de l'élément de crochet 1, des rampes de guidage 1e latérales qui sont appelées à protéger l'extrémité libre du levier de verrouillage 2 contre less chocs, notamment lorsque l'appareil de levage fait descendre cet ensemble de crochet. Ces rampes de guidage 1e sont indiquées schématiquement sur les figures 1, 5 et 6.

**Revendications**

1. Ensemble de crochet de manutention pour appareil de levage, comprenant un crochet (1) définissant une boucle qui comporte un bras court (1c) dont l'une des extrémotés est reliée à une extrémité d'un bras long (1b) dudit crochet par une partie courbe de celui-ci, les extrémité libres respectives desdits bras court et long (1c, 1b) étant disposées de façon telle qu'elles définissent entre elles un intervalle permettant d'introduire dans ladite boucle, ou de retirer de celle-ci, une élingue (10) ou analogue appelée à porter une charge, ledit ensemble comprenant, en outre, un levier de verrouillage (2) pourvu, à une de ses extrémités, d'une ouverture (6) appelée à recevoir un câble de levage ou analogue associé dudit appareil de levage, ce levier de verrouillage (2) étant monté sur ledit bras long (1b) à proximaté de l'extrémité libre de celui-ci de maniére à être déplaçable angulairement autour d'un axe de pivotement (3) entre une position d'ouverture dans laquelle ledit intervalle est dégagé et ledit levier (2) est place à proximité dudit bras long (1b) à l'intérieur de ladite boucle et une position de verrouillage dans laquelle ledit levier (2) ferme l'intervalle précité en s'appuyant par son autre extrémité sur ledit bras court (1c) sous l'effet de la pesenteur dans une condition de travail dans laquelle l'ensemble de crochet, l'élingue et, le cas échéant la charge, sont soulevés par l'appareil de levage associé, caractérisé en ce que ledit levier de verrouillage (2) est pourvu, à son autre extrémité précitée, d'une partie sensiblement en forme de pied de biche (8) définissant des surfaces d'appui, cependant que ledit bras court (1c) du crochet (1) est pourvu, à son extrémité libre, de protubérances (5) formant des épaulements qui s'étendent latéralement et sur lesquels lesdites surfaces d'appui de la partie en pied de biche (8) sont appelées à s'appliquer sous l'effet de la pesanteur lorsque ledit ensemble de crochet est amené dans ladite condition de travail.

2. Ensemble selon la revendication 1, caractérisé en ce que ladite ouverture (6), apellée à recevoir ledit câble de levage est placée à un niveau plus élevé que celui dudit axe de pivotement (3) lorsque ledit ensemble est suspendu audit câble de levage.

3. Ensemble selon la revendication 1 ou 2, caractérisé en ce que le levier de verrouillage (2) est monté sur un pivot (3) supporté par deux branches espacées latéralement d'une partie en forme de fourche (1d) prévue à ladite extrémité libre du bras long (1b) du crochet (1), et dans lequel ledit levier de verrouillage comporte une partie plate (4) engagée à pivotement dans l'espace défini entre lesdites branches de la partie en forme de fourche, ce pivot étant monté dans un trou oblong (4a) ménagé dans ladite partie plate du levier de verrouillage de maniére telle que la dimension la plus grande de ce trou oblong s'étende sensiblement verticalement lorsque ledit ensemble de crochet est suspendu audit câble de levage et que ce pivot soit déplaçable dans ledit trou oblong entre une position haute et une position basse, cependant que ladite partie plate du levier de verrouillage comporte des éléments de butées (14) s'étendant latéralement à partir de ses deux surfaces, ladite partie en forme de fourche étant pourvue d'encoches (16) espacées angulairement qui sont appelées à recevoir sélectivement lesdits éléments de butées, l'agencement étant tel que ces éléments de butée s'engagent chacun dans une encoche correspondante lorsque ledit pivot se trouve dans ladite position haute dans le trou oblong pour bloquer ledit levier de verrouillage soit dans la position d'ouverture, soit dans la position de verrouillage tandis que lesdits éléments de butée ne s'engagent pas dans lesdites encoches lorsque ledit pivot se trouve dans sa position basse dans ledit trou oblong

4. Ensemble selon une quelconque des revendications 1 à 3, caractérisé en ce que ledit crochet (1) comporte des rampes de guidage (1e) disposées à proximité de ladite extrémité libre du bras court (1c) précité et appelées à protéger l'extrémité dudit levier de verrouillage (2) contre les chocs lorsque ledit appareil de levage fait descendre l'ensemble de crochet.

5. Ensemble selon l'une quelconque des revendications 1 à 4, dans lequel ladite ouverture appelée à recevoir ledit câble de levage est ménagée dans un élément (12) relié audit levier de verrouillage par un bloc pivotant (11).

## Patentanspruche

1. Förderhakenvorrichtung für ein Hebegerät mit einem eine Schleife bildendem Haken (1), der einen an einem seiner Enden durch einen gekrümmten Hakenteil mit einem Ende eines langen Armes (1b) verbundenen kurzen Arm (1c) aufweist, wobei die jeweiligen freien Enden des kurzen Armes und des langen Armes (1c, 1b) derart angeordnet sind, dass sie einen Zwischenraum bilden, durch welchen hindurch eine eine Last tragende Hebeschlinge od. dgl. (10) in die Schleife einführbar bzw. aus derselben entnehmbar ist, sowie mit einem Verriegelungshel (2), der an einem seiner Enden eine ein mit dem Hebegerät zusammenwirkendes Hebekabel od. dgl. aufnehmende Oeffnung (6) besitzt und an dem langen Arm (1b) in Nähe des freien Endes desselben um eine Schwenkachse (3) derart schwenkbar angeordnet ist, dass er beweglich ist zwischen einer Oeffnungsstellung, in welcher der genannte Zwischenraum frei ist und der Hebel (2) in Nähe des langen Armes (1b) liegt, und einer Verriegelungsstellung, in welcher der Hebel (2) den genannten Zwischenraum schliesst, indem sein anderes Ende sich unter Einwirkung der Schwerkraft am kurzen Arm (1c) abstützt in einer Arbeitsstellung, in welcher die Förderhakenvorrichtung, die Hebeschlinge und ggf. die Last vom Hebegerät angehoben werden, dadurch gekennzeichnet, dass der Verriegelungshebel (2) an seinem genannten anderen Ende einen wesentlich geissfussförmigen Teil (8) aufweist, der Anlegeflächen besitzt, während der kurze Arm (1c) des Hakens (1) an seinem freien Ende mit Vorsprüngen (5) versehen ist, welche sich in Querrichtung erstreckende Schultern bilden, an denen die Anlegeflächen des geissfussförmigen Teils (8) unter dem Einfluss der Schwerkraft andrückbar sind, wenn die Förderhakenvorrichtung sich in der Arbeitsstellung befindet.

2. Vorrichtung nach Anspruch 1, dadurch gekennzeichnet, dass die das Hebekabel aufnehmende Oeffnung (6) höher liegt, als die genannte Schwenkachse (3), wenn die Vorrichtung an dem Hebekabel aufgehängt ist.

3. Vorrichtung nach Anspruch 1 oder 2, dadurch gekennzeichnet, dass der Verriegelungshebel (2) auf einer Schwenkachse (3) gelagert ist, die durch zwei mit seitlichem Abstand angeordnete Arme eines gabelförmigen Teiles (1d) an dem genannten freien Ende des langen Armes (1b) des Hakens (1) gehalten ist, wobei der Verriegelungshebel einen flachen Teil (4) aufweist, der schwenkbar in den zwischen den Armen des gabelförmigen Teiles gebildeten Zwischenraum eingreift und die Schwenkachse in ein Langloch (4a) des flachen Teiles des Verriegelungshebels eingreift, derart, dass die grösste Abmessung des Langloches sich wesentlich senkrecht erstreckt, wenn die Förderhakenvorrichtung am Hebekabel aufgehängt ist, und dass die Schwenkachse in dem Langloch zwischen einer oberen Lage und einer unteren Lage beweglich ist, während der flache Teil des Verriegelungshebels sich seitlich von seinen beiden Oberflächen erstreckende Anschlagelemente (14) aufweist und der gabelförmige Teil mit im Winkelabstand angeordneten Kerben (16) versehen ist, die wahlweise die Anschlagelemente (14) aufnehmen, derart, dass jedes dieser Anschlagelemente in eine entsprechende Kerbe eingreift, wenn die Schwenkachse sich in dem Langloch in der oberen Lage befindet, um den Verriegelungshebel in seiner Oeffnungsstellung bzw. seiner Verriegelungsstellung zu halten, während die Anschlagelemente nicht in die genannten Kerben eingreifen, wenn die Schwenkachse im Langloch sich in der unteren Lage befindet.

4. Vorrichtung nach einem der Ansprüche 1 bis 3, dadurch gekennzeichnet, dass der Haken (1) Führungsflächen (1e) aufweist, die in Nähe des genannten freien Endes des kurzen Armes (1c) angeordnet und geeignet sind, das Ende des Verriegelungshebels (2) gegen Stösse zu schützen, wenn die Förderhakenvorrichtung von dem Hebegerät gesenkt wird.

5. Vorrichtung nach einem der Ansprüche 1 bis 4, dadurch gekennzeichnet, dass die das Hebekabel aufnehmende Oeffnung in einem vermittels eines Schwenkblocks (11) mit dem Verriegelungshebel verbundenen Bauteil (12) angeordnet ist.

## Claims

1. Handling hook assembly for a hoisting apparatus, comprising a hook (1) forming a loop having a short arm (1c) one end of which is connected to an end of a long arm (1b) of said hook by a curved portion of the latter, the free ends of said respective long and short arms being spaced from each other to define therebetween a gap for permitting the introduction into, or removal from the hook, of a sling (10) or the like for carrying a load, said assembly further comprising a locking lever (2) having, at one of its ends, an aperture (6) for receiving an associated lifting cable or the like of said hoisting apparatus, said locking lever (2) being mounted on said long arm (1b) near the free end of the latter so as to be angularly movable about a pivot axis (3) between an open position in which said gap is open and said lever (2) is disposed near said long arm (1b) within said loop and a locking position in which said lever (2) closes said gap by gravity leaning its other end against said short arm (1c) in a working condition in which the hook assembly, the sling and, on occasion, the load, are lifted by the associated hoisting apparatus, characterized in that said locking lever (2) is provided, at its above-mentioned other end, with a substantially cabriole-leg-like portion (8) defining engaging surfaces, while the said short arm (1c) is provided, at its free end, with protrusions (5) forming laterally extending shoulders on which said engaging surfaces of the cabriole-leg-like portion (8) are gravity-loaded when said hook assembly is brought to said working condition.

2. Assembly according to claim 1, characterized in that said aperture (6) for receiving said lifting cable is located at a level higher than that of the said pivot axis (3) when said assembly depends from said lifting cable.

3. Assembly according to claim 1 or 2, characterized in that the locking lever (2) is mounted on a pivot (3) mounted on two laterally spaced branches of a fork-like portion (1d) provided at said free end of the long arm (1b) of hook (1), and wherein said locking lever comprises a flat portion (4) pivotally mounted within the space located between said branches of the fork-like portion, that pivot being mounted in an eccentric hole (4a) provided in said flat portion of the locking lever so as to have the longer dimension of that eccentric hole extending substantially vertically when said hook assembly depends from said lifting cable and so as to have the pivot movable within said eccentric hole between an upper position and a lower position, whereas said flat portion of the locking lever comprises stop members (14) extending laterally from both surfaces of said flat portion, said fork-like portion being provided with angularly spaced notches (16) for selectively receiving said stop members, the arrangement being such that each of these stop members engages a corresponding notch when said pivot is in said upper position in the eccentric hole for locking said locking lever either in the open position or in the locking position, whereas said stop members do not engage said notches when said pivot is in its lower position in said eccentric hole.

4. Assembly according to any one of claims 1 to 3, characterized in that said hook (1) is provided with guiding ramps (1c) adjacent to said free end of the above-mentioned short arm (1c) for protecting the end of said locking lever (2) against shocks while said hoisting apparatus lowers said hook assembly.

5. Assembly according to one of claims 1 to 4, wherein said aperture adapted to receive said lifting cable is provided in an element connected to said locking lever by a swivel block.

fig. 1

fig. 2

fig. 3

fig. 4

fig. 5

fig. 6